(19) Europäisches Patentamt / European Patent Office / Office européen des brevets

(11) **EP 4 494 737 A1**

(12) **EUROPEAN PATENT APPLICATION**

(43) Date of publication:
**22.01.2025 Bulletin 2025/04**

(21) Application number: **23186978.5**

(22) Date of filing: **21.07.2023**

(51) International Patent Classification (IPC):
**B01D 53/02** (2006.01)

(52) Cooperative Patent Classification (CPC):
**B01D 53/02;** B01D 2253/104; B01D 2253/108;
B01D 2253/1124; B01D 2256/10; B01D 2257/502

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nederlandse Organisatie voor
toegepast-natuurwetenschappelijk Onderzoek
TNO
2595 DA 's-Gravenhage (NL)**

(72) Inventor: **The designation of the inventor has not
yet been filed**

(74) Representative: **Nederlandsch Octrooibureau
P.O. Box 29720
2502 LS The Hague (NL)**

(54) **CO-N2 SEPARATION BY MEANS OF A SIMULATED MOVING BED**

(57) The invention concerns a process for the separation of carbon monoxide (CO) from a feed comprising CO and nitrogen ($N_2$), wherein the process is carried out in a simulated moving bed (SMB) system. The invention furthermore concerns an SMB system for the separation of carbon monoxide (CO) from a feed comprising CO and nitrogen ($N_2$) comprising serially connected adsorption columns each comprising a CO adsorbent.

**Figure 1**

**Description**

**Introduction**

Carbon monoxide can be produced by the incomplete oxidation of carbon or carbon-containing feedstock, as well as by the reduction of carbon dioxide. Industrially, large quantities of CO are produced from syngas derived from biomass and fossil fuels by gasification, reforming, or partial oxidation. On smaller scales, production is possible electrochemically. Most of the globally produced CO is used in Fisher-Tropsch synthesis, methanol production, hydroformylation, phosgene and acetic acid production. Both for thermochemical and electrochemical production of CO, purification is necessary as it is often produced with a mixture of $H_2$, $CO_2$, $H_2O$, $CH_4$ and $N_2$. In other sectors, the CO is produced as by-product that contains $H_2$, $CO_2$, $N_2$ and is currently valorised through combustion for electricity production, generation of steam or satisfying internal heating demand. This is undertaken as part of iron and steel, titanium, carbides, carbon black production and others. Alternatively, the carbon monoxide can also be recovered from the off-gases of these industrial processes.

In achieving the large-scale decarbonisation or even recarbonisation (i.e. substituting fossil derived carbon with biomass derived carbon) $CO_2$ utilisation plays a key role. In such a process CO and $CO_2$ are converted to various chemicals thermochemically or electrochemically. If direct utilisation of these gases is attempted, the large quantities of nitrogen can significantly hamper overall conversion due to reduced partial pressure of the reactive components and exacerbated if a recycle is introduced. There is also the potential economic drawback from the use of $N_2$ rich feed as larger compressors reactors and separation systems are required.

The separation of CO is typically required from $CO_2$, $N_2$, $CH_4$. Chemical engineering separation principles show that molecular properties and by extension bulk properties (vapour pressure, absorptivity, solubility, diffusivity) can be used to formulate ways of separating the gas mixture. When there is a large difference in these molecular properties, they can indicate a method of performing the separation. Due to the many similar properties of CO and $N_2$ this latter combination provides for a very challenging separation.

Four processes are currently available for separation of CO from gas mixtures: cryogenic purification, absorption, pressure swing adsorption (EP 2258996 B1) and membrane separation (James et al., Front. Chem. Eng., Sec. Separation Processes, Volume 5 - 2023). Cryogenic processes are not suitable for separation of CO from $N_2$ in case higher amounts of $N_2$ are present such as for example in blast gasses from steel factories and the energy use is high due to the cooling and compression that is needed. Absorption developments focus on the use of ionic liquids to replace solvents, with promising progress being made in the field of CO solubility in ionic liquids, however the development has not progressed beyond academics. Advancements in pressure swing adsorption processes have focused on the development of new materials. The most used adsorbents are copper-based. Still, as pressure swing adsorption requires vacuum regeneration the technology is not attractive as vacuum regeneration is very energy intensive. Membrane processes are most promising in the form of solid state and mixed matrix membranes. In general, there is limited development beyond lab scale for new advancements in CO separation from gas streams. This highlights an opportunity and need to for beyond state-of-the-art processes for CO separation at industrial scale, especially for separation of CO from $N_2$.

There is a need for CO-$N_2$ separation methods that require less energy, while providing for good CO purity. Specifically, there is a need for a method that does not require temperature and/or pressure gradients as such gradients in industrial process typically are energy intensive.

**Summary of the invention**

The current inventors surprisingly found a method for separating CO from $N_2$ that needs less energy compared to conventional separation methods especially since no temperature or pressure gradients need to be applied. Moreover, the temperature of the method can be accommodated to the temperature of the incoming gas stream and/or to the required temperature of a possible follow-up process step. Contrary to some other method, the method is suitable for mixtures of CO and $N_2$ comprising $N_2$ not only in minor concentrations as impurity but in considerable amounts; the molar $N_2$ concentration may be higher than the CO concentration. For this method surprisingly no or relatively small temperature or pressure gradients are required. Especially no vacuum zones are present. The inventive method delivers CO with high purity and a considerable amount of the incoming CO can be retrieved. Moreover, the technology is able to process streams comprising impurities such a sulphur due to that the process allows for the use of relatively robust adsorbent materials (for example conventionally used copper-based sorbents are sulphur intolerant).

In a first embodiment the invention concerns a process for the separation of carbon monoxide (CO) from a feed comprising CO and nitrogen ($N_2$), wherein

- the process is carried out in a simulated moving bed (SMB) system comprising serially connected adsorption columns each comprising a CO adsorbent, and
- the feed and a desorbent are provided to the SMB system and a raffinate comprising $N_2$ and an extract comprising CO are obtained from the SMB system.

The invention furthermore concerns the use of an CO adsorbent selected from the list from activated alumina, mixed metal oxide (MMO), hydrotalcite, zeolite and combinations thereof for the separation of carbon monoxide (CO) from a feed comprising CO and nitrogen ($N_2$), wherein the separation is carried out in an SMB system.

The invention also concerns the use of a CO adsorbent of which the constant n of the CO Freundlich adsorption isotherm is in the range of 0.5 - 4.0 for the separation of carbon monoxide (CO) from a feed comprising CO and nitrogen ($N_2$), wherein the separation is carried out in an SMB system and wherein the CO Freundlich adsorption isotherm of the CO adsorbent is determined at the operating temperature of the process.

In a further embodiment the invention concerns an SMB system for the separation of carbon monoxide (CO) from a feed comprising CO and nitrogen ($N_2$) comprising serially connected adsorption columns each comprising a CO adsorbent.

Simulated moving bed (SMB) technology is mainly applied in separation of liquids. In the rare application for gas separation SMB is proposed to purify $H_2$ (US2010089233A1 - wherein a pressure gradient is applied) or to separate or purify $CO_2$ (WO2015006267A2). In none of these publications CO is extracted from a feed comprising CO and $N_2$.

The current inventors found that several classes of adsorbents are suitable as adsorbent in a SMB system for the separation of carbon monoxide (CO) from a feed comprising CO and nitrogen ($N_2$). The Freundlich adsorption isotherm of an adsorbent at the intended operating temperature of the SMB system maybe used to establish the suitability of an adsorbent. Typically, an n constant of the Freundlich adsorption isotherm in the range of 0.5-4.0 is indicative for a suitable adsorbent.

The embodiments disclosed in this document apply to all aspects of the invention, i.e. the process for the separation of carbon monoxide (CO) from a feed comprising CO and nitrogen ($N_2$), the use in the separation of carbon monoxide (CO) from a feed comprising CO and nitrogen ($N_2$) and the SMB system for the separation of carbon monoxide (CO) from a feed comprising CO and nitrogen ($N_2$). In case an embodiment is discussed for one aspect of the invention, this embodiment also applies for the other aspects of the invention.

When downstream or upstream is mentioned, this refers to the gas flow direction in the SMB. When gas flows from a first column to a second column, the first column is upstream of the second column and the second column is downstream of the first column.

**Detailed Description**

*Simulated moving bed*

Simulated moving bed technology is known in the art (for example: Sharma D., Simulated Moving Bed Technology: Overview and Use in Biorefineries. Biorefineries - Selected Processes. IntechOpen; 2022., US2010089233A1, WO2015006267A2). The technology evolved from a true moving bed in which both the adsorbent and the desorbent move counter currently. In contrary for an SMB system the adsorbent is stagnant and only the SMB simulates this modus of operation by having multiple serially connected adsorption columns and switching the inlet flows and outlet flows periodically. The simulated counter current flow allows for longer contact times which is favourable because of the extensive mass transfer zone. Typically, no pressure or temperature gradients are present in a SMB. For other adsorption technologies these gradients are applied to create separate thermodynamically favourable conditions for adsorption and desorption.

A simulated moving bed system comprises at least 2 zones, but mostly 3 or 4 zones (Zhang et al., Research progress on the typical variants of simulated moving bed: From the Established Processes to the Advanced Technologies, Processes 2023, 11, 508). Each zone comprises one or more adsorption columns. The number of adsorption columns per zone may vary between zones. Each adsorption column comprises the adsorbent. The adsorption columns are connected in series so that the exit of an adsorption column is in direct fluid contact with the entrance of the next adsorption column. In closed loop SMB systems for all adsorption columns the exit of an adsorption column is in direct fluid contact with the entrance of the next adsorption column. This is also the case for open loop SMB systems, except that the exit of the last adsorption column of the last zone is not in direct fluid contact with the entrance of the first adsorption column of the first zone.

In addition, the entrance of each adsorption column is in direct fluid contact with an entry point and the exit of each adsorption column is in direct fluid contact with an exit point. Theses entry points and exit points are for feeding and retrieving specific flows to and from the SMB system. Each of these entry points and exit points may be closed so that no flow is fed at that entry point or obtained at that exit point. Or in other words, only at specific entry points and exit points of the SMB system a flow is fed or obtained.

The SBM system of the invention comprises zones. In a preferred embodiment the SMB system of the invention comprises 2, 3 or 4 zones, more preferably 3 or 4 zones. The SMB system of the invention may be an open loop SMB system or a closed loop SMB system. Preferably the SMB system is an open loop SMB system, more preferably the SMB system comprises 3 zones and is an open loop SMB system. For such open loop system, the purity of the CO in the extract may be higher. In another preferred embodiment the SMB system is a closed loop SMB system, more preferably the SMB system comprises 4 zones and is a closed loop SMB system. For such closed loop system, the CO recovery is higher and less desorbent is required.

In an SMB system repeatedly after a time interval the feed and desorbent entry point and the extract and raffinate exit point simultaneously shift one adsorption column further therewith shifting each zone one adsorption column further. In a preferred embodiment the time interval is in the range of 1-10000 seconds, more preferably 5-1000 seconds, even more preferably 10-100 seconds, most preferably 15 - 50 seconds. The time interval depends amongst others on the throughputs of feed, desorbent, raffinate and/or extract, and the amount of adsorbent present in the different zones.

In a preferred embodiment, the SMB system of the invention comprises 4 zones wherein each zone comprises at least one adsorption column and wherein

- the feed is provided to an entry point in direct fluid contact with the entrance of the first adsorption column of the first zone and the raffinate is obtained from an exit point in direct fluid contact with the exit of the last column of the first zone, and
- the desorbent is provided to an entry point in direct fluid contact with the entrance of the first adsorption column of the third zone and the extract is obtained from an exit point in direct fluid contact with the exit of the last column of the third zone,

and wherein repeatedly after a time interval the feed and desorbent entry point and the extract and raffinate exit point simultaneously shift one adsorption column further downstream therewith shifting each zone one adsorption column further downstream, and wherein the SMB system is a closed loop SMB system in which exit of the last column of the fourth zone is in direct fluid contact with the entrance of the first column of the first zone.

In another preferred embodiment, the SMB system comprises 3 zones wherein each zone comprises at least one adsorption column and wherein

- the desorbent is provided to an entry point in direct fluid contact with the entrance of the first adsorption column of the first zone and the extract is obtained from an exit point in direct fluid contact with the exit of the last column of the first zone, and
- the feed is provided to an entry point in direct fluid contact with the entrance of the first adsorption column of the third zone and the raffinate is obtained from an exit point in direct fluid contact with the exit of the last column of the third zone,

and wherein repeatedly after a time interval the feed and desorbent entry point and the extract and raffinate exit point simultaneously shift one adsorption column further therewith shifting each zone one adsorption column further, and wherein the SMB system is an open loop SMB system in which exit of the last column of the third zone is not in direct fluid contact with the entrance of the first column of the first zone.

The SMB system of the invention is provided with a feed. The feed is the gas mixture to be separated, so the feed comprises CO and $N_2$. CO in this feed is the adsorbate, so the to be adsorbed species. The SMB system of the invention is also provided with a desorbent. The desorbent is a gas that desorbs the CO from the adsorbent. Considering that the desorbent that is fed at an entry point comprises low amounts of CO or no CO, the CO partial pressure is in the desorbent is low or absent at that point and the adsorbed CO will desorb and tag along with the desorbent towards the end of that zone. A raffinate is obtained from the SMB system. The raffinate carries away most of the $N_2$ that is fed to the SMB system. Typically, the raffinate is obtained at the end of the zone in which the CO is adsorbed. So, the feed and possibly the flow from the previous zone enters this zone, the CO subsequently adsorbs in this zone and at the end of that zone a raffinate is obtained that is depleted of CO. Also an extract is obtained from the SMB system. The extract mainly comprises CO and the desorbent. Typically, the extract is obtained at the end of the zone in which the CO is desorbed. So, the desorbent and possibly the flow from the previous zone enters this zone, the CO subsequently desorbs in this zone and at the end of that zone an extract is obtained that is rich in CO.

In a preferred embodiment the process of the invention is operated at a temperature in the range of 15 - 500°C, even more preferably in the range of 15 - 400°C, even more preferably in the range of 50 - 300°C, particularly preferably in the range of 15 - 100°C or 150 - 350°C. The temperature of the process may be selected based on the adsorbent and/or the origin of the feed. The feed may arrive at a certain temperature and maintaining this temperature promotes overall process efficiency. Next to this, each adsorbent has a preferred operational temperature window within which adsorption and desorption are satisfactory for an SBM process. A skilled person is aware of the preferred operational temperature window of an adsorbent or can easily find out by measuring adsorption isotherms at different temperatures. Typically, within this operational temperature window a higher temperature facilitates desorption, especially for materials with a high binding energy. In one preferred embodiment for mixed metal oxide adsorbents or hydrotalcite adsorbents the process of the invention is operated at a temperature in the range of 150 - 350°C, for activated alumina and zeolite adsorbents the process of the invention is operated at a temperature in the range of 15 - 100°C. In case different adsorption columns and/or zones have different temperatures, the temperature of the process is the temperature of the adsorption column and/or zone to which the feed is provided.

In a preferred embodiment the process of the invention is operated a pressure in the range of 0.1 - 30 bar, preferably in the range of 1 - 20 bar, most preferably in the range of 2 - 10 bar.

In a preferred embodiment the process of the invention is operated isobaric and/or isothermal, more preferably isobaric and isothermal. Isobaric refers to that the pressure of the different zones is substantially the same. Preferably the difference in pressure between the different zones is less than 0.2 bar. Isothermal refers to that the temperature of the different zones is substantially the same. Preferably the difference in temperatures between the different zones is less than 10°C. Some temperature differences are to be expected due to sorption and desorption thermodynamics.

In some embodiments sorption and/or desorption in the SMB system is beneficially promoted by increasing the temperature and/or pressure in specific zones compared to the pressure and/or temperature in the upstream zone. Still, preferably none of the adsorption columns have a pressure below 0.5 bar, more preferably below 0.2 bar, most preferable below 0.1 bar and/or preferably none of the zones of the SMB system have a pressure below 0.5 bar, more preferably below 0.2 bar, most preferable below 0.1 bar. Having pressure differences between zones and/or adsorption columns wherein at least one of the adsorption columns and/or zones has a low pressure especially a vacuum is energy inefficient. In a preferred embodiment at least 2 zones and/or at least 2 adsorption columns of the SBM system have a temperature difference in the range of 10 - 200°C, more preferably 20 - 100°C, even more preferably 30 - 70°C. A too high difference provides for lower energy efficiency of the process. A too low difference may affect the separation efficiency negatively. In a preferred embodiment at least 2 zones and/or at least 2 adsorption columns of the SBM system have a pressure difference in the range of 0.5 - 10 bar, more preferably 1-5 bar. A too high difference provides for lower energy efficiency of the process. A too low difference may affect the separation efficiency negatively.

*The adsorbent*

The adsorbent in a SMB system is a solid, typically a particulate solid. A CO adsorbent is an adsorbent that is capable of adsorbing CO at the temperature at which the SMB system is operated. Suitable CO adsorbents are characterized by the n constant of the Freundlich adsorption isotherm for that CO adsorbent.

The Freundlich adsorption isotherm, is an empirical relationship between the quantity of a gas adsorbed to an adsorbent and the partial gas pressure of that gas. The gas that is adsorbed is the adsorbate, which is abbreviated as 'ad'. The Freundlich adsorption isotherm describes an equilibrium situation. The quantity of adsorbate adsorbed at a specific partial pressure and temperature in the Freundlich adsorption isotherm is named the equilibrium loading and is represented by the symbol $q_{ad}$ and is expressed in mol adsorbate per kg adsorbent. For example, in case CO is the adsorbate the equilibrium loading of CO is represented as $q_{co}$ and expressed in mol CO adsorbed per kg CO adsorbent. The partial gas pressure in the Freundlich adsorption isotherm is the partial pressure of the adsorbate in the gas surrounding the adsorbent represented by the symbol $p_{ad}$ and is expressed in bar. For example, in case CO is the adsorbate the partial pressure of CO is represented as $p_{co}$. The Freundlich adsorption isotherm correlates the quantity of gas adsorbed to an adsorbent under equilibrium conditions to the partial pressure of that gas as follows: $q_{ad} = Kp_{ad}^{1/n}$. K and n are constants for a given adsorbate and adsorbent at a given temperature, n is a dimensionless constant and the dimension of K is $mol \cdot kg^{-1} \cdot bar^{-(1/n)}$. In case n=1 $q_{ad}$ linearly correlates with $p_{ad}$, for values of n > 1 an adsorbent binds a relative high amount of adsorbate at low partial pressure (relative to that at a higher partial pressure). For CO adsorption the Freundlich adsorption isotherm is described by $q_{co} = Kp_{co}^{1/n}$.

When n>>1 even at low $p_{ad}$ the equilibrium loading $q_{ad}$ will be high. In a simulated moving bed, typically no pressure or temperature gradients are present. Adsorption and subsequent desorption of a specific adsorbate is steered by the concentration of that adsorbate in the gas that passes the adsorbent. In case n >> 1 desorption will only occur at very low partial pressure of the adsorbate and will stop at a modest increase of the partial pressure of the adsorbate. Already at a low amount of desorbed adsorbate the partial pressure in the desorbate will be such that no further adsorbate desorbs. This will result in an inefficient simulated moving bed, as a large amount of desorbent is needed to extract the adsorbate. Moreover, the concentration of the adsorbate in the extract will be low. In case n ≈ 1 desorption of the adsorbate will beneficially continue at higher partial pressure of the adsorbate. Although a high $q_{ad}$ is useful for a SMB since less adsorbent will be needed to adsorb the same amount of adsorbate, surprisingly a beneficial value of the constant n of the Freundlich adsorption isotherm was found more important as a simulated moving bed has a large (simulated) mass transfer zone which compensates for a relatively low $q_{ad}$.

In a preferred embodiment the constant n of the CO Freundlich adsorption isotherm of the CO adsorbent is in the range of 0.5 - 4.0, more preferably in the range of 1.0 - 3.0, most preferably in the range of 1.0 - 2.0, wherein the CO Freundlich adsorption isotherm is determined at the operating temperature of the SMB system. The CO Freundlich adsorption isotherm is represented by the formula $q_{co} = Kp_{CO}^{1/n}$ wherein $q_{co}$ is the equilibrium loading of CO expressed in mol CO per kg CO adsorbent, $p_{co}$ is the partial pressure of CO and K and n are constants. The constants K and n can be determined by measuring the CO adsorption isotherm of the CO adsorbent at the temperature at which the SMB system is operated and fitting the obtained curve to the formula $q_{co} = Kp_{CO}^{1/n}$. In other words, qco as a function of $p_{co}$ at a specific temperature for the Co adsorbent is determined and the obtained curve is fitted to the formula $q_{co} = Kp_{CO}^{1/n}$. Fitting also named curve fitting is the process of constructing a mathematical function that has the best fit to a series of data points. Fitting may be performed by a least squares routine. $q_{co}$ as a function of $p_{co}$ may be measured in a method wherein a continuous stream of gas comprising CO at a partial pressure $p_{co}$ and one or more inert gasses such as argon is provided to an amount of adsorbent that is fully depleted of CO and wherein the concentration of CO in the exit stream is measured and wherein the total amount of CO fed to the adsorbent from the start of feeding the continuous stream of gas up to the moment the CO concentration increases in the exit stream is determined and $q_{co}$ at that $p_{co}$ is this total amount of CO fed to the adsorbent divided by the amount of adsorbent. $q_{co}$ as a function of $p_{co}$ is determined at different pco's.

In a preferred embodiment the equilibrium loading of CO ($q_{co}$) of the CO adsorbent at the CO partial pressure of the feed ($p_{co}$) and the operating temperature of the process of the invention is at least 0.02 mol CO/kg CO adsorbent, more preferably at least 0.03 mol CO/kg CO adsorbent, even more preferably at least 0.05 mol CO/kg CO adsorbent, even more preferably at least 0.1 mol CO/kg CO adsorbent, $q_{co}$ may be measured by the method as described in this document. A higher $q_{co}$ at the CO partial pressure of the feed ($p_{co}$) and the operating temperature of the process of the invention provides for a more economical design of the SMB system.

Preferably, the constant n of the CO Freundlich adsorption isotherm of the CO adsorbent is in the range of 0.5 - 4.0, more preferably in the range of 1.0 - 3.0, most preferably in the range of 1.0 - 2.0 and the equilibrium loading of CO ($q_{co}$) of the CO adsorbent at the CO partial pressure of the feed ($p_{co}$) and the operating temperature of the process of the invention is at least 0.02 mol CO/kg CO adsorbent. More preferably, the constant n of the CO Freundlich adsorption isotherm of the CO adsorbent is in the range of 0.5 - 4.0, more preferably in the range of 1.0 - 3.0, most preferably in the range of 1.0 - 2.0 and the equilibrium loading of CO ($q_{co}$) of the CO adsorbent at the CO partial pressure of the feed ($p_{co}$) and the operating temperature of the process of the invention is at least 0.03 mol CO/kg CO adsorbent. Even more preferably, the constant n of the CO Freundlich adsorption isotherm of the CO adsorbent is in the range of 0.5 - 4.0, more preferably in the range of 1.0 - 3.0, most preferably in the range of 1.0 - 2.0 and the equilibrium loading of CO ($q_{co}$) of the CO adsorbent at the CO partial pressure of the feed ($p_{co}$) and the operating temperature of the process of the invention is at least 0.05 mol CO/kg CO adsorbent.

In a preferred embodiment the equilibrium loading of $N_2$ ($q_{N2}$) of the CO adsorbent at the $N_2$ partial pressure of the feed ($p_{N2}$) and the operating temperature of the process of the invention is at most 0.001 mol $N_2$/kg CO adsorbent, more preferably the CO adsorbent does not adsorb $N_2$ at the $N_2$ partial pressure of the feed ($p_{N2}$) and the operating temperature of the process of the invention.

Any suitable CO adsorbent may be used in the process of the invention. In a preferred embodiment the CO adsorbent is selected from the list of activated alumina, mixed metal oxide, hydrotalcite, zeolite and combinations thereof, more preferably the CO adsorbent is selected from the list of activated alumina, zeolite, hydrotalcite and combinations thereof, even more preferably the CO adsorbent is hydrotalcite. For these embodiments preferably the hydrotalcite is a promoted hydrotalcite, more preferably alkali-metal promoted hydrotalcite, even more preferably potassium promoted hydrotalcite.

*The feed*

The current invention surprisingly is capable of separating a feed comprising CO and $N_2$ wherein a considerable amount of $N_2$ is present. Such feed may be obtained from blast furnace gas of steel factories. The latter gas typically comprises $N_2$, $CO_2$, CO and $H_2$ (about 51 vol% $N_2$, 22 vol.% $CO_2$, 22 vol.% CO and 5 vol.% $H_2$). Conventionally this gas is used as energy source, but it would be beneficial to use the $CO_2$ and CO as raw material (carbon utilization). Other sources of gasses that comprise considerable amounts of $N_2$, $CO_2$ and CO are the resulting gasses when a fuel is (partially) oxidized by air. In such resulting gasses and in blast furnace gasses the $CO_2$ can be relatively easily removed, but the subsequent separation of CO and $N_2$ is far more cumbersome. In a preferred embodiment the feed is obtained from blast furnace gas of steel factories.

In a preferred embodiment the feed comprises at least 80 mol% on total of the dry feed of the sum of CO and $N_2$, more preferably at least 90 mol% on total of the dry feed, even more preferably at least 95 mol% on total of the dry feed, most preferably at least 98 mol% on total of the dry feed. Preferably the feed comprises in the range of 1-70 mol% CO on total of the dry feed, more preferably 5 - 70 mol% CO on total of the dry feed, even more preferably in the range of 10 - 50 mol% on total of the dry feed most preferably in the range of 20 - 40 mol% on total of the dry feed. In a preferred embodiment the feed comprises on total of the dry feed in the range of 50 - 90 mol% $N_2$ and 10 - 50 mol% CO, more preferably in the range of 60 - 80 mol% $N_2$ and 20 - 40 mol% CO. In a preferred embodiment the feed comprises 0.1-10 mol% Hz on total of the dry feed, more preferably 1-8 mol% Hz on total of the dry feed, most preferably 2-8 mol% Hz on total of the dry feed. The dry feed is the feed without water. Preferably the feed comprises less than 20 mol% water on total of the feed, more preferably less than 10 mol%, most preferably less than 1 mol%.

## The desorbent

For SMB processes the desorbent preferably should be easy to separate from the adsorbate or the combination of adsorbate and desorbent in the extract should be a valuable stream for further processing.

In a preferred embodiment the desorbent is hydrogen ($H_2$) and/or steam ($H_2O$), more preferably $H_2$. The combination of $H_2$ and CO is a useful starting material for processes requiring a synthesis gas feed, such as Fischer-Tropsch synthesis, methanol synthesis, or the Sabatier process. On the other hand, $H_2$ and CO in the ... can be easily separated, for example by membranes. Also, $H_2O$ can be easily removed from CO by condensation. The $H_2$ and/or $H_2O$ that is separated may be reintroduced in the SMB system as desorbent.

The raffinate comprises $N_2$. Furthermore, the raffinate may comprise the desorbent. By having $H_2$ and/or $H_2O$ as desorbent, these desorbent can be easily separated from the raffinate and be reintroduced in the SMB system as desorbent.

The desorbent may or may not adsorb to the adsorbent. In the first situation displacement takes place, the desorbent displaces the adsorbed adsorbate. In a preferred embodiment the equilibrium loading of the desorbent ($q_{desorbent}$) of the CO adsorbent at the desorbent partial pressure of the fed desorbent and the operating temperature of the process of the invention is at least 0.02 mol desorbent/kg CO adsorbent, more preferably at least 0.03 mol desorbent/kg CO adsorbent, even more preferably at least 0.05 mol desorbent/kg CO adsorbent. Alternatively, the equilibrium loading of the desorbent ($q_{desorbent}$) of the CO adsorbent at the desorbent partial pressure of the fed desorbent and the operating temperature of the process of the invention is less than 0.001 mol desorbent/kg CO adsorbent.

## General Definitions

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one". The word "about" or "approximately" when used in association with a numerical value (e.g. about 10) preferably means that the value may be the given value more or less 1% of the value.

The present invention has been described above with reference to a number of exemplary embodiments. Modifications and alternative implementations of some parts or elements are possible, and are included in the scope of protection as defined in the appended claims. All citations of literature and patent documents are hereby incorporated by reference.

Bara stands for bar absolute and concerns the pressure that is zero-referenced against a perfect vacuum. 1 bar is 100,000 N/m$^2$. 1 bar is 100,000 Pascal.

## Description of the figures

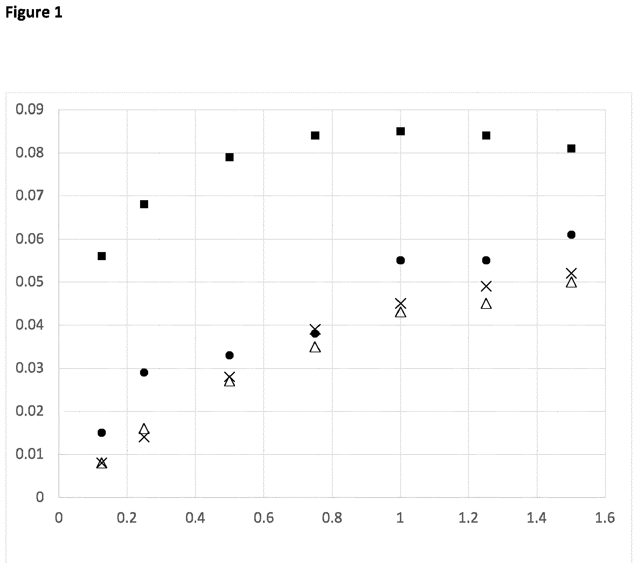

Figure 1 depicts the CO adsorption isotherm of different CO adsorbents at 300°C. The x-axis represents the CO partial pressure expressed in bar, the y-axis is the CO equilibrium loading of the CO adsorbent expressed in mol CO / kg CO adsorbent. The black squares is MMO-0.0-K, the black circles is MMO-0.54-K, the open triangles is MMO-0.54-UP, the X-symbols is MMO-0.54-Li,

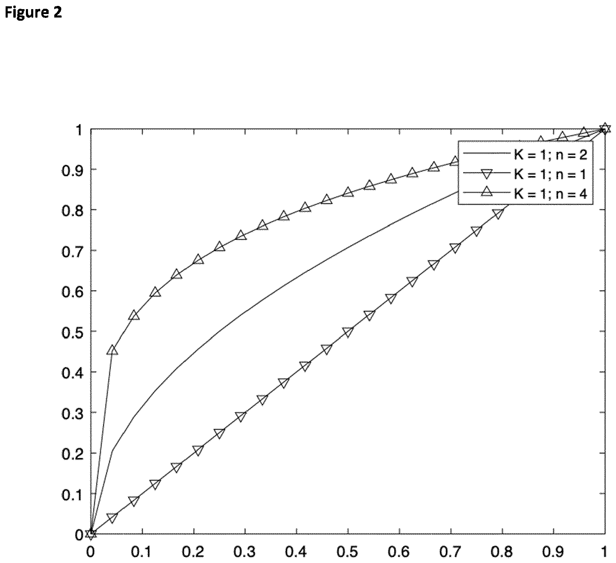

Figure 2 represents a simulation of the Freundlich adsorption isotherm for different values of the n constant. The x-axis represents the CO partial pressure expressed in bar, the y-axis is the CO equilibrium loading of the CO adsorbent expressed in mol CO / kg CO adsorbent. For all simulations, the K constant is 1. The line comprising open triangles wherein one of the corners points downwards and two corners point upwards is the curve for n=1, the black line without triangles is the curve for n=2, the line comprising open triangles wherein one of the corners points upwards and two corners point downwards is the curve for n=14.

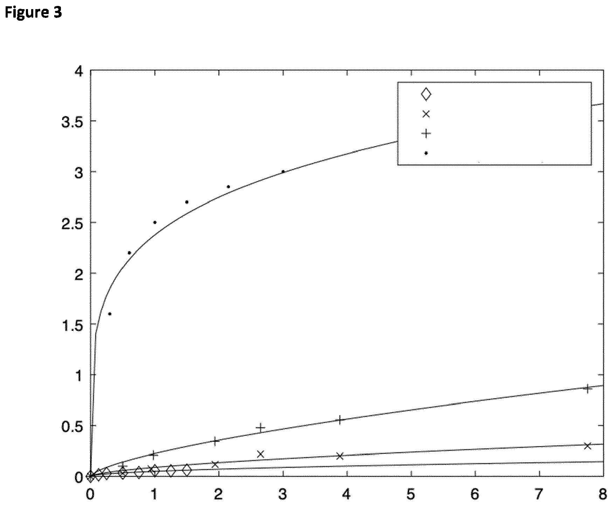

Figure 3 depicts the CO adsorption isotherm of different CO adsorbents. The x-axis represents the CO partial pressure expressed in bar, the y-axis is the CO equilibrium loading of the CO adsorbent expressed in mol CO / kg CO adsorbent. The symbols represent measured values, the different lines depict least square fits of the Freundlich adsorption isotherm with the constants n and K as fitting parameters for the different CO adsorbents. The open diamonds is MMO-0.0-K, the X-symbols is AA-300, the plus symbols is H-Beta, the black circles is CuCl. The CO adsorption isotherm for AA-300, H-Beta and CuCl are determined at 30°C, the CO adsorption isotherm for MMO-0.54-K is determined at 300°C.

**Example 1 - CO adsorbent isotherms**

Several mixed metal oxides (MMO's) as listed in table 1 were tested for their breakthrough capacity. All the materials concerned (promoted) magnesium and aluminum mixed metal oxides. The materials are hydrotalcites. The powders were pelletised, crushed, and sieved to obtain a sieve fraction between 212 - 425 micrometres ($\mu$m). All these materials were found not to adsorb $N_2$ at the relevant SMB temperatures.

*Table 1. Mixed metal oxide (MMO) adsorbent materials selected for screening tests.*

| Name | Mg/Al (mol ratio) | Promotion | Sample Mass (g) |
|---|---|---|---|
| MMO-0.54-UP | 0.54 | Unpromoted | 16.55 |
| MMO-0.54-K | 0.54 | Potassium | 13.1 |
| MMO-0.54-Li | 0.54 | Lithium | 15.27 |
| MMO-0.0-K | 0.0 | Potassium | 22.04 |

A premixed gas was fed to an adsorption column having a diameter of 11 millimetre (mm) comprising the MMO adsorbent. The flow of each gas was controlled by mass flow controllers. The premixed gas forming the feed varied in the CO partial pressure. The composition of the outcoming flow was analysed by a mass spectrometer. Through a switchable valve the feed could bypass the adsorption column and be directly fed to the mass spectrometer for calibration purposes. The premixed gas comprised a mixture of Argon (as inert component), CO and a He tracer. For all adsorbents, breakthrough capacities (mol CO adsorbed per kg adsorbent at the moment of breakthrough) were measured at 300 °C for CO partial pressures up to 1.5 bar. These data were corroborated into isotherms. In separate experiments it was demonstrated that the materials do not interact with nitrogen.

*Table 1: CO equilibrium loading as a function of CO partial pressure for different adsorbents.*

| PARTIAL PRESSURE OF CO [BAR] | MMO-0.54-UP [MOL/KG] | MMO-0.54-LI [MOL/KG] | MMO-0.54-K [MOL/KG] | MMO-0.0-K [MOL/KG] |
|---|---|---|---|---|
| 0.125 | 0.008 | 0.008 | 0.015 | 0.056 |
| 0.250 | 0.016 | 0.014 | 0.029 | 0.067 |
| 0.500 | 0.027 | 0.028 | 0.033 | 0.079 |
| 0.750 | 0.035 | 0.039 | 0.038 | 0.085 |
| 1.000 | 0.043 | 0.045 | 0.055 | 0.085 |
| 1.250 | 0.045 | 0.049 | 0.055 | 0.083 |
| 1.500 | 0.050 | 0.052 | 0.061 | 0.081 |

In table 1 and figure 1 the results are depicted. Adsorbents that are suitable for SMB processes should have a relative low adsorption capacity at low CO partial pressure and a relative high adsorption capacity at high CO partial pressure, therewith enabling a good adsorption in the CO adsorption zone and a good desorption in the CO desorption zone. The nature of an SMB system is such that a large mass transfer zone is available, and therewith there is no need for a (very) high adsorption capacity of the adsorbent at high partial CO pressure, whilst on the other side there is no pressure or temperature gradient available, and therefore desorption should be good at low partial CO pressure. Therefore MMO-0.54-K, MMO-0.54-UP and MMO-0.54-Li all are good adsorbents, wherein MMO-0.54-K has a somewhat higher adsorption capacity at higher CO partial pressure at the cost of a somewhat higher partial pressure at a low CO partial pressure. MMO-0.0-K has the highest adsorption capacity at all CO partial pressures, but the capacity is hardly dependent on the partial CO pressure and therefore this adsorbent is less suitable for an SMB process.

**Example 2** - **Freundlich adsorption isotherm parameters**

Three Freundlich adsorption isotherm were simulated with a same K constant and a different n constants. The result is in figure 2. Figure 2 demonstrates that the n constant has a clear effect on the CO adsorption a low CO partial pressure, a higher n constant provides for relatively higher adsorption at lower partial pressure (relatively high compared to high CO partial pressure). Such relatively high adsorption is undesirable for a simulated moving bed as a large amount of desorbent is needed for desorption.

As a follow-up, Freundlich adsorption isotherm constants were fitted for several CO adsorbents: the MMO adsorbents of example 1, an activated alumina adsorbent (AA-300) at 30°C and a zeolite adsorbent (H-Beta) at 30°C published by Wilson et al. (Separation and Purification Technology, doi:10.1016/j.seppur.2018), and a CuCl adsorbent on a porous activated carbon support at 30°C published by Gao et al. (RSC Adv. 8 (2018) 39362-39370, doi:10.1039/C8RA08578A). The CuCl adsorbents is the most used CO-adsorbent in pressure swing adsorption (CuCl), and the zeolite and activated alumina adsorbents represent two very common classes of CO adsorbents, zeolite adsorbents and base metal oxide adsorbents. The resulting K and n constants are listed in table 2 and the adsorption capacity of the adsorbents from the literature are in figure 3.

*Table 2: Freundlich adsorption isotherm constants for different CO adsorbents.*

| | K [mol kg$^{-1}$ bar$^{(-1/n)}$] | n [-] |
|---|---|---|
| **AA-300** | 0.089 | 1.6 |
| **H-Beta** | 0.22 | 1.5 |
| **CuCl** | 2.4 | 4.8 |
| **MMO-0.54-UP** | 0.040 | 1.6 |
| **MMO-0.54-LI** | 0.042 | 1.5 |
| **MMO-0.0-K** | 0.083 | 6.8 |
| **MMO-0.54-K** | 0.050 | 1.9 |

Table 2 demonstrates that MMO-0.54-UP and the CuCl adsorbent are less suitable for SMB CO separation as the n constant is very high, this is representative for a relatively high CO adsorption at low partial pressures which makes the desorption step in an SMB inefficient, if not impossible, or require a high desorbent flow. On the other hand, a zeolite adsorbent, an activated alumina adsorbent and several promoted hydrotalcites have an n constant below 4.0 and therefore are suitable as CO adsorbent in a SMB system.

**Example 2** - **Simulation of an SMB process for the separation of carbon monoxide (CO) from a feed comprising CO and nitrogen (N$_2$)**

The isotherm of MMO-0.54-K of example 1 was used for model-based process design for a simulated moving bed (SMB). The feed gas composition was according to table 3. This gas composition is representative for a blast furnace gas.

*Table 3. Feed gas composition for the model simulation*

| SPECIES | CONCENTRATION MOL % |
|---|---|
| **H$_2$O** | 0.4 |
| **CO$_2$** | 0.5 |
| **H$_2$** | 6.4 |
| **CO** | 31.6 |
| **N$_2$** | 59.6 |
| **INERT** | 1.5 |

*The SMB model*

A SMB model was developed in Matlab (v2020) making use of the model approach of Gomes et al. (Chemical Engineering Science 64 (2009) 1336 - 1357). The following assumptions were made:

- The gradients in the radial direction are assumed to be absent.
- The mass transfer from bulk fluid to the sorbent surface is accounted using the linear driving force (LDF) model.
- The model obeys ideal gas equation of state.
- The fluid velocity is always constant, and it is represented as an axially dispersed plug flow pattern.
- Since the pressure drop is not significant, the pressure dynamics is ignored.
- All the zones will have equal number of columns.

The set of partial differential equations (PDE) of Gomes et al. (2009) were solved as set of ordinary differential equations (ODE) using the so-called Method of Lines procedure (J. Boon, "High-temperature separation of carbon dioxide and hydrogen by sorption enhanced water-gas shift and palladium membranes", Ph.D. Thesis. 2016, pp. 1-2). The spatial coordinates are discretized on a uniform grid using the first-order central difference scheme for convective terms and first-order forward difference scheme for dispersion terms. The resulting time dependent ODE's are solved using an in-built Matlab ODE solver. The model was validated against the results of Gomes et al. (2009) for a gas-phase separation of Propane (C3H6) and Propylene (C3H8) with i-Butane (i-C4H10) as desorbent in a 4-zone SMB. The validation gave satisfactory results.

*Results*

A standard 4-zone SMB having a closed loop using Hz as a desorbent was simulated with a switch time of 20 seconds. The absorption isotherm of the MMO-0.54-K adsorbent was used as an adsorbent. The extract contained (excluding $H_2$) 81 mol% CO and 19 mol% $N_2$; 83 % of the CO was recovered. The SMB operated isobaric, desorption occurs because of the Hz desorbent that is fed to the SMB system. For the desorption, 0.52 kg Hz is used per kg of CO. A second open loop cycle design was tested, where the $4^{th}$ zone had been removed. The three zone SMB performed different from the four zone SMB on several aspects. Importantly, the CO purity in the extract was much higher at 99 mol% (excluding $H_2$). Conversely, the CO recovery had been reduced to 77 %, and the system operated at an increase Hz desorbent use. The resulting performance parameters for the two SMB system designs are summarised in

*Table 1.* A three zone SMB provided for a higher CO purity of the extract, whilst a four zone SMB provided for a higher recovery and a lower desorbent use. The results for both SMB-setups demonstrate that CO can be successfully purified in an SMB system.

*Table 1. Performance results of the 3-zone and 4-zone SMB cycle design with 20 s switch time. Percentages concern mol%. The mol% for purity is excluding $H_2$. Recovery concerns the amount of CO in the extract relative to the amount of CO in the feed.*

| | UNIT | 3-ZONE | | 4-ZONE | |
|---|---|---|---|---|---|
| | | CO | $N_2$ | CO | $N_2$ |
| Purity* | % | 99 | 74 | 81 | 73 |
| Recovery | % | 77 | 99 | 83 | 92 |
| Productivity | $\dfrac{kg_{Product}}{kg_{sorbent}\,day}$ | 1.07 | 2.69 | 1.23 | 2.59 |
| Desorbent consumption | $\dfrac{kg_{H_2}}{kg_{CO}}$ | 0.99 | | 0.52 | |

An additional simulation was carried out making use of the absorption isotherms of the MMO-0.54-K, CuCl and AA-300 adsorbents for the 4-zone SBM cycle design as described above. In table 4 the desorbent/feed ratio for these adsorbents is listed. The use of the CuCl adsorbent having a relative high n constant results in that about twice the amount of desorbent is needed compared to the adsorbents having a lower n constant. Obviously, this affects the overall process efficiency in a negative way.

*Table 4. Desorbent/feed ratio for a 4-zone SMB cycle design with 20 s switch time for three different adsorbents.*

| Adsorbent | n constant (-) | Desorbent/Feed ratio (-) |
|---|---|---|
| MMO-0.54-K | 1.9 | 1.72 |
| CuCl | 4.8 | 3.33 |
| AA-300 | 1.6 | 1.72 |

**Claims**

1. A process for the separation of carbon monoxide (CO) from a feed comprising CO and nitrogen ($N_2$), wherein

    - the process is carried out in a simulated moving bed (SMB) system comprising serially connected adsorption columns each comprising a CO adsorbent, and
    - the feed and a desorbent are provided to the SMB system and a raffinate comprising $N_2$ and an extract comprising CO are obtained from the SMB system.

2. The process according to claim 1, wherein the desorbent is hydrogen ($H_2$) and/or steam ($H_2O$).

3. The process according to claim 1 or 2, wherein the feed comprises at least 80 mol% on total of the dry feed of the sum of CO and $N_2$, preferably at least 90 mol% on total of the dry feed, most preferably at least 95 mol% on total of the dry feed.

4. The process according to any one of the preceding claims wherein the feed comprises in the range of 5 - 70 mol% CO on total of the dry feed, preferably in the range of 10 - 50 mol% on total of the dry feed most preferably in the range of 20 - 40 mol% on total of the dry feed.

5. The process according to any one of the preceding claims wherein the SMB system comprises 4 zones wherein each zone comprises at least one adsorption column and wherein

    - the feed is provided to an entry point in direct fluid contact with the entrance of the first adsorption column of the first zone and the raffinate is obtained from an exit point in direct fluid contact with the exit of the last column of the first zone, and
    - the desorbent is provided to an entry point in direct fluid contact with the entrance of the first adsorption column of the third zone and the extract is obtained from an exit point in direct fluid contact with the exit of the last column of the third zone,

    and wherein repeatedly after a time interval the feed and desorbent entry point and the extract and raffinate exit point simultaneously shift one adsorption column further downstream therewith shifting each zone one adsorption column further downstream, and wherein the SMB system is a closed loop SMB system in which exit of the last column of the fourth zone is in direct fluid contact with the entrance of the first column of the first zone.

6. The process according to any one of claims 1-4 wherein the SMB system comprises 3 zones wherein each zone comprises at least one adsorption column and wherein

    - the desorbent is provided to an entry point in direct fluid contact with the entrance of the first adsorption column of the first zone and the extract is obtained from an exit point in direct fluid contact with the exit of the last column of the first zone, and
    - the feed is provided to an entry point in direct fluid contact with the entrance of the first adsorption column of the third zone and the raffinate is obtained from an exit point in direct fluid contact with the exit of the last column of the third zone,

    and wherein repeatedly after a time interval the feed and desorbent entry point and the extract and raffinate exit point simultaneously shift one adsorption column further downstream therewith shifting each zone one adsorption column further downstream, and wherein the SMB system is an open loop SMB system in which exit of the last column of the third zone is not in direct fluid contact with the entrance of the first column of the first zone.

7. The process according to claim 5 or claim 6.

8. The process according to any one of the preceding claims wherein the process is operated is operated at a temperature in the range of 15 - 500°C, more preferably in the range of 15 - 400°C, even more preferably in the range of 15 - 100°C or 150 - 350°C.

9. The process according to any one of the preceding claims wherein the process is operated a pressure in the range of 0.1 - 30 bar, preferably in the range of 1 - 20 bar, most preferably in the range of 2 - 10 bar.

10. The process according to any one of the preceding claims, wherein the process is operated isobaric and/or isothermal.

11. The process according to any one of the preceding claims, wherein the constant n of the CO Freundlich adsorption isotherm of the CO adsorbent is in the range of 0.5 - 4.0, preferably in the range of 1.0 - 3.0, most preferably in the range of 1.0 - 2.0, wherein the CO Freundlich adsorption isotherm of the CO adsorbent is determined at the operating temperature of the process.

12. The process according to any one of the preceding claims wherein the equilibrium loading of CO $q_{co}$ of the CO adsorbent at the CO partial pressure of the feed and the operating temperature of the process is at least 0.02 mol CO/kg CO adsorbent, preferably at least 0.03 mol CO/kg CO adsorbent.

13. The process according to any one of the preceding claims, wherein the CO adsorbent is selected from the list of activated alumina, mixed metal oxide, hydrotalcite, zeolite and combinations thereof, more preferably the CO adsorbent is selected from the list of activated alumina, zeolite, hydrotalcite and combinations thereof, even more preferably the CO adsorbent is hydrotalcite, even more preferably alkali-metal promoted hydrotalcite.

14. An SMB system for the separation of carbon monoxide (CO) from a feed comprising CO and nitrogen ($N_2$) comprising serially connected adsorption columns each comprising a CO adsorbent.

**Figure 1**

**Figure 2**

**Figure 3**

**EUROPEAN SEARCH REPORT**

Application Number

EP 23 18 6978

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RIBEIRO, RUI ET AL.: "Two-column relay simulated moving-bed process for gas-phase separations", SEPARATION AND PURIFICATION TECHNOLOGY, vol. 182, 31 March 2017 (2017-03-31), pages 19-28, XP029985628, ISSN: 1383-5866, DOI: 10.1016/J.SEPPUR.2017.03.037 | 14 | INV. B01D53/02 |
| Y | * see, in particular, figures 1,2,4 and 6; point 1.1 lines 1-4 and point 2.1, lines 1-6; see point 3.1 "Mathematical model" Inventive Step: see in particular page 2, left column, lines 31-37; ee point 2.3 "Fixed bed experiments", lines 7-9; * | 1-14 | |
| Y | FIKRI ELANDA ET AL: "Effectiveness of Carbon Monoxide Concentration Reduction on Active Carbon Contact System in Burning Polystyrene Foam", JOURNAL OF ECOLOGICAL ENGINEERING, vol. 19, no. 4, 1 July 2018 (2018-07-01), pages 1-6, XP093116122, ISSN: 2299-8993, DOI: 10.12911/22998993/89717 * see, in particular, page 2, right column lines 5-28; page 2, right column lines 5-28 and Table 2. * | 1-14 | TECHNICAL FIELDS SEARCHED (IPC) B01D |

-/--

The present search report has been drawn up for all claims

| Place of search | Date of completion of the search | Examiner |
|---|---|---|
| Munich | 5 January 2024 | Rumbo, Angel |

EPO FORM 1503 03.82 (P04C01)

Europäisches
Patentamt

European
Patent Office

Office européen
des brevets

# EUROPEAN SEARCH REPORT

Application Number

**EP 23 18 6978**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QIAN XIAODONG ET AL: "The study of smoke, heat release and fire spread characteristics of expanded polystyrene under low oxygen condition", JOURNAL OF THERMAL ANALYSIS AND CALORIMETRY, vol. 148, no. 3, 28 November 2022 (2022-11-28), pages 821-829, XP093116386, NL ISSN: 1388-6150, DOI: 10.1007/s10973-022-11788-5 Retrieved from the Internet: URL:https://link.springer.com/article/10.1007/s10973-022-11788-5/fulltext.html> * see, in particular, figure 1 (a) * | 3,4 | |
| A | NACHTIGALL P. ET AL: "Computational and FTIR spectroscopic studies on carbon monoxide and dinitrogen adsorption on a high-silica H-FER zeolite", PHYSICAL CHEMISTRY CHEMICAL PHYSICS, vol. 11, no. 5, 1 January 2009 (2009-01-01), pages 791-802, XP093116032, ISSN: 1463-9076, DOI: 10.1039/B812873A * see, in particular table 3 and figure 5 "adsorption of CO and N2" * | 1-14 | TECHNICAL FIELDS SEARCHED (IPC) |

-/--

The present search report has been drawn up for all claims

| Place of search | Date of completion of the search | Examiner |
|---|---|---|
| Munich | 5 January 2024 | Rumbo, Angel |

EPO FORM 1503 03.82 (P04C01)

Europäisches
Patentamt

European
Patent Office

Office européen
des brevets

# EUROPEAN SEARCH REPORT

Application Number

EP 23 18 6978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KUPPUSAMY MUNUSAMY ET AL: "Sorption of carbon dioxide, methane, nitrogen and carbon monoxide on MIL-101(Cr): Volumetric measurements and dynamic adsorption studies", CHEMICAL ENGENEERING JOURNAL, ELSEVIER, AMSTERDAM, NL, vol. 195, 23 April 2012 (2012-04-23), pages 359-368, XP028497474, ISSN: 1385-8947, DOI: 10.1016/J.CEJ.2012.04.071 [retrieved on 2012-05-04] * see, in particular, tables 1,2,4,5 and figures 7,8 * | 1-14 | |
| Y | FEYZBAR-KHALKHALI-NEJAD FARSHAD ET AL: "Adsorption-based CO removal: Principles and materials", JOURNAL OF ENVIRONMENTAL CHEMICAL ENGINEERING, vol. 9, no. 4, 1 August 2021 (2021-08-01), page 105317, XP093115592, NL ISSN: 2213-3437, DOI: 10.1016/j.jece.2021.105317 * see, in particular, figures 2,3,4 . * | 1-14 | |

-----

-/--

TECHNICAL FIELDS
SEARCHED      (IPC)

The present search report has been drawn up for all claims

| Place of search | Date of completion of the search | Examiner |
|---|---|---|
| Munich | 5 January 2024 | Rumbo, Angel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 18 6978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KO KWANG-JUN ET AL: "Overview of Carbon Monoxide Adsorption Performance of Pristine and Modified Adsorbents", JOURNAL OF CHEMICAL AND ENGINEERING DATA., vol. 67, no. 7, 3 May 2022 (2022-05-03), pages 1599-1616, XP093115587, US ISSN: 0021-9568, DOI: 10.1021/acs.jced.1c00903 Retrieved from the Internet: URL:https://pubs.acs.org/doi/pdf/10.1021/acs.jced.1c00903> * see, in particular, figures 1-7 and tables 1-4 * | 1-14 | |
| A | EP 0 916 383 A1 (PRAXAIR TECHNOLOGY INC [US]) 19 May 1999 (1999-05-19) * see, in particular, paragraph [0029] , figure 1 and table 1. * | 1-14 | |
| A | SETHIA GOVIND ET AL: "Adsorption of carbon monoxide, methane and nitrogen on alkaline earth metal ion exchanged zeolite-X: structure, cation position and adsorption relationship", RSC ADVANCES, vol. 5, no. 17, 1 January 2015 (2015-01-01), pages 12773-12781, XP093115789, GB ISSN: 2046-2069, DOI: 10.1039/C4RA11511B * see, tables 1,2,3 and figures 1,2,3 * | 1-14 | TECHNICAL FIELDS SEARCHED (IPC) |

-/--

The present search report has been drawn up for all claims

| Place of search | Date of completion of the search | Examiner |
|---|---|---|
| Munich | 5 January 2024 | Rumbo, Angel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 18 6978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Sharma Deepak: "Simulated Moving Bed Technology: Overview and Use in Biorefineries" In: "Biorefineries – Selected Processes", 28 April 2022 (2022-04-28), IntechOpen, XP093115558, ISBN: 978-1-83969-735-7 pages 1-22, DOI: 10.5772/intechopen.99991, * see, in particular, figures 1-10 * | 1-14 | |
| A | BORHANI JEBELI M. ET AL: "Adsorption of carbon monoxide on novel and Merck activated carbon treated by dielectric barrier discharge", INTERNATIONAL JOURNAL OF ENVIRONMENTAL SCIENCE AND TECHNOLOGY, vol. 19, no. 6, 2 February 2022 (2022-02-02), pages 4779-4790, XP093115584, IR ISSN: 1735-1472, DOI: 10.1007/s13762-021-03663-x Retrieved from the Internet: URL:https://link.springer.com/article/10.1 007/s13762-021-03663-x/fulltext.html> * see figures 1-6 and tables 1-2 * | 1-14 | |
| A | MOHAMAD A B ET AL: "Adsorption of carbon monoxide on activated carbon-tin ligand", JOURNAL OF MOLECULAR STRUCTURES, vol. 550-551, 1 January 2000 (2000-01-01), pages 511-519, XP093115596, * see, figures 4.5 and table 1 * | 1-14 | |

TECHNICAL FIELDS SEARCHED (IPC)

-/--

The present search report has been drawn up for all claims

| Place of search | Date of completion of the search | Examiner |
|---|---|---|
| Munich | 5 January 2024 | Rumbo, Angel |

EPO FORM 1503 03.82 (P04C01)

Europäisches
Patentamt
European
Patent Office
Office européen
des brevets

# EUROPEAN SEARCH REPORT

Application Number

EP 23 18 6978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PIPER J. ET AL: "The adsorption of carbon monoxide on graphite", MOLECULAR PHYSICS, vol. 53, no. 6, 20 December 1984 (1984-12-20), pages 1463-1480, XP093116096, GB ISSN: 0026-8976, DOI: 10.1080/00268978400103111 Retrieved from the Internet: URL:https://dx.doi.org/10.1080/00268978400 103111> * see, figures 1-9 and tables 1-4 * ----- | 1-14 | |

TECHNICAL FIELDS
SEARCHED (IPC)

The present search report has been drawn up for all claims

| Place of search | Date of completion of the search | Examiner |
|---|---|---|
| Munich | 5 January 2024 | Rumbo, Angel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 6978

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2024

| Patent document cited in search report | | Publication date | Patent family member(s) | | Publication date |
|---|---|---|---|---|---|
| EP 0916383 | A1 | 19-05-1999 | BR | 9804320 A | 14-12-1999 |
| | | | CA | 2252454 A1 | 30-04-1999 |
| | | | CN | 1216750 A | 19-05-1999 |
| | | | EP | 0916383 A1 | 19-05-1999 |
| | | | ID | 21192 A | 06-05-1999 |
| | | | JP | H11216326 A | 10-08-1999 |
| | | | KR | 19990037480 A | 25-05-1999 |
| | | | US | 5983667 A | 16-11-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2258996 B1
- US 2010089233 A1
- WO 2015006267 A2

**Non-patent literature cited in the description**

- **JAMES et al.** *Front. Chem. Eng., Sec. Separation Processes*, 2023, vol. 5
- Simulated Moving Bed Technology: Overview and Use in Biorefineries. **SHARMA D.** Biorefineries - Selected Processes. IntechOpen, 2022
- **ZHANG et al.** Research progress on the typical variants of simulated moving bed: From the Established Processes to the Advanced Technologies. *Processes*, 2023, vol. 11, 508
- **WILSON** ; **GAO et al.** Separation and Purification Technology, doi:10.1016/j.seppur.2018), and a CuCl adsorbent on a porous activated carbon support at 30°C. *RSC Adv.*, 2018, vol. 8, 39362-39370
- **GOMES et al.** *Chemical Engineering Science*, 2009, vol. 64, 1336-1357
- **J. BOON**. High-temperature separation of carbon dioxide and hydrogen by sorption enhanced water-gas shift and palladium membranes. *Ph.D. Thesis.*, 2016, 1-2